# NEUE EUROPÄISCHE PATENTSCHRIFT

(11) **EP 0 637 482 B2**
(45) Veröffentlichungstag und Bekanntmachung des Hinweises auf die Entscheidung über den Einspruch: **23.03.2005**
(45) Hinweis auf die Patenterteilung: 22.12.1999
(21) Anmeldenummer: 94810421.1
(22) Anmeldetag: 15.07.1994
(51) Int. Cl.: B23Q 3/02, G01B 21/04, B23H 7/04

(54) **Verfahren zum Positionieren eines Werkstücksträgers in einer Bearbeitungsmaschine sowie zugehöriger Werkstückträger**
Method of positioning a workpiece-holder in a machine, and workpiece-holder therefor
Procédé de positionnement d'un porte-pièce dans une machine d'usinage, ainsi que porte-pièce correspondant

(30) Priorität: 05.08.1993 DE 4326275
(43) Veröffentlichungstag der Anmeldung: 08.02.1995
(73) Patentinhaber: Erowa AG, CH-5734 Reinach (CH)
(72) Erfinder: Obrist, Basil, CH-5728 Gontenschwil (CH)
(74) Vertreter: Rottmann, Maximilian R.

(56) Entgegenhaltungen:
- EP-A- 0 065 247
- EP-A- 0 104 270
- EP-A- 0 237 490
- EP-B- 0 342 256
- DE-A- 3 713 131
- DE-A- 3 713 145
- PATENT ABSTRACTS OF JAPAN vol. 12, no. 93 (P-680) 26. März 1988 & JP-A-62 226 308 (FANUC LTD.) 5. Oktober 1987
- PATENT ABSTRACTS OF JAPAN vol. 8, no. 170 (M-315) 7. August 1984 & JP-A-59 064 256 (YAMAZAKI TEKKOSHO K.K.) 12. April 1984
- PATENT ABSTRACTS OF JAPAN vol. 14, no. 549 (M-1055) 6. Dezember 1990 & JP-A-02 232 143 (KOMATSU LTD.) 14. September 1990
- PATENT ABSTRACTS OF JAPAN vol. 7, no. 55 (M-198) (1200) 5. März 1983 & JP-A-57 201 134 (MITSUBISHI DENKI K.K.) 9. Dezember 1982
- PATENT ABSTRACTS OF JAPAN vol. 8, no. 209 (E-268) 22. September 1984 & JP-A-59 096 629 (HITACHI SEISAKUSHO K.K.) 4. Juni 1984
- IBM TECHNICAL DISCLOSURE BULLETIN, Bd.28, Nr.8, Januar 1986 Seiten 3246 - 3247 'Calibration scheme for simple robot'
- TECHNISCHE RUNDSCHAU, Bd.76, Nr.44, Oktober 1984, BERN CH Seiten 54 - 56 J. PETTAVEL 'Zielsetzungen in der Schweizer Dreikoordinaten-Messtechnik'
- PATENT ABSTRACTS OF JAPAN vol. 12, no. 175 (P-707) 25. Mai 1988 & JP-A-62 286 107 (FANUC LTD.) 12. Dezember 1987
- PATENT ABSTRACTS OF JAPAN vol. 16, no. 165 (M-1238) 21. April 1992 & JP-A-04 013 540 (MURATA MACH LTD.) 17. Januar 1992
- IBM Technical Disclosure Bulletin, Vol. 28, Nr. 8, Jan.1986, Seiten 3246-3247

## Beschreibung

Die Erfindung betrifft ein Verfahren zum Positionieren eines Werkstückträgers in einer Bearbeitungsmaschine sowie einen zugehörigen Werkstückträger und eine Verwendung eines solchen Werkstückträgers nach dem Anspruch 25.

Um Bearbeitungsmaschinen möglichst ohne längeren Unterbruch betreiben zu können, werden die zu bearbeitenden Werkstücke schon ausserhalb der Bearbeitungsmaschine in Werkstückträger eingespannt und die Position dieser Werkstücke innerhalb des Werkstückträgers, vorzugsweise in einem speziell dafür eingerichteten Messplatz, ermittelt und festgehalten. Als Referenz dienen dabei die am Werkstückträger üblicherweise vorgesehenen Befestigungs- bzw. Spannmittel, mit welchen der Werkstückträger beim Aufspannen auf den Bearbeitungstisch der Bearbeitungsmaschine zusätzlich definiert ausgerichtet wird, d.h., zumindest eines der Befestigungs- bzw. Spannmittel definiert eine Positionsreferenz.

Diese Befestigungs- bzw. Spannmittel umfassen in den meisten Fällen Zentrierzapfen, welche gegenüber dem Werkstückräger vorstehen und beim Aufspannen des Werkstückträgers auf dem Bearbeitungstisch in korrespondierend am Bearbeitungstisch angeordnete Öffnungen eingreifen und dadurch sowohl den Werkstückträger wie auch die darin eingespannten Werkstücke gegenüber der Bearbeitungsmaschine in der Lage definiert ausrichten. Die Zentrieröffnungen können natürlich auch am Werkstückträger und die Zentrierzapfen am Bearbeitungstisch angeordnet sein.

Die genaue Position jedes Werkstücks im Werkstückträger wird im allgemeinen durch zwei senkrecht zueinander liegende Achsen in X-und in Y-Richtung sowie in Bezug auf die Winkellage um die Z-Achse definiert. Die Position der Werkstücke in Z-Richtung ist im Zusammenhang mit der Bearbeitung dieser Werkstücke genau so wichtig, von der Bestimmung bzw. Positionierung her jedoch weit weniger kritisch.

Verfahren zum positionsdefinierten Einspannen von Werkstückträgern mit einem oder mehreren darin befestigten und zu bearbeitenden Werkstück(en) sind in zahlreichen Varianten bekannt. Die Anforderungen, die an solche Verfahren gestellt werden, variieren sehr stark mit der gewünschten Bearbeitungsgenauigkeit der Werkstücke. Soll ein Werkstück zudem in mehreren Schritten auf mehreren, teilweise unterschiedlichen Bearbeitungsmaschinen bearbeitet werden, muss der Werkstückträger mehrmals ein- und ausgespannt werden. Dabei ist neben der absoluten Positionier-Genauigkeit vor allem auch eine hohe Reproduzierbarkeit der Lage beim jeweiligen Aufspannen des Werkstückträgers, beispielsweise auf dem Bearbeitungstisch der Bearbeitungsmaschine, wichtig.

Bei den nachfolgenden Betrachtungen in Bezug auf Verfahren zum Positionieren von Werkstückträgern sowie Ausführungsformen von Werkstückträgern wird insbesondere davon ausgegangen, dass eine Bearbeitungsgenauigkeit der im Werkstückträger eingespannten Werkstücke im Bereich von einigen tausendstel bis zu einigen hundertstel Millimetern gefordert wird bzw. erreicht werden soll.

Aus der DE-PS 31 15 586 ist ein Verfahren gemäß dem oberbegriff des unabhängigen Anspruchs 1 bekannt und ist beispielsweise eine zweiteilige Vorrichtung zum Einspannen von kleinen Werkstücken bekannt, welche ein Spannfutter und einen daran befestigbaren Werkstückträger umfassen. Das Spannfutter besitzt zur Positionierung vorstehende Zentrierzapfen, welche in korrespondierend am Werkstückträger angeordnete Zentrieröffnungen eingreifen. Durch zwei solche jeweils miteinander zusammenarbeitende Zapfen/Öffnungs Paare wird eine Positionsbestimmung des Werkstückträgers und damit der darin eingespannten Werkstücke gewährleistet. Mit dem einen Zapfen/Öffnungs Paar soll dabei die Bestimmung in der X- und Y-Richtung übernommen werden, währenddem durch das andere Paar die Winkelposition um die Z-Achse festgelegt werden soll.

Um mit einer solchen Vorrichtung eine hohe Einspanngenauigkeit zu erreichen, ist es unabdingbar, dass sowohl die Zentrierzapfen wie auch die Zentrieröffnungen bezüglich ihrer relativen Lage zueinander sehr präzise angeordnet sind. Denn nur dadurch wird ein einwandfreies Zusammenarbeiten beim Eingreifen der Zapfen in die Öffnungen gewährleistet. Dies jedoch bringt einen hohen Fertigungsaufwand und dadurch entsprechend hohe Kosten mit sich.

Ein weiteres Problem einer solchen Vorrichtung stellt sich durch die in den meisten Fällen verwendeten konischen Zentrierzapfen, da durch beide Zapfen/Öffnungs-Paare die Lage in X- und Y Richtung jeweils unabhängig voneinander definiert ist, mit der Folge, dass die geometrische Lage überbestimmt ist.

Bei grossen Vorrichtungen und Rahmen treten diese Nachteile naturgemäss stärker zutage, da bei diesen, im Interesse einer möglichst stabilen und genauen Position, die einzelnen Zapfen/Öffnungs-Paare möglichst weit auseinander angeordnet sind. Nachteilig bei einer solchen Anordnung der Zapfen/Öffnungs-Paare ist, dass, beispielsweise durch Wärmedehnung der Vorrichtung, die erzielbare Genauigkeit beeinträchtigt wird, so dass bei Vorrichtungen mit einer Länge von ca. 50 cm die Spanngenauigkeit bzw. Reproduzierbarkeit der Lage des Werkstückträgers im Bereich von mehreren hundertstel Millimetern variieren kann.

Um diese Probleme zu minimieren, hat die Anmelderin bereits eine aus der EP-A2-0 403 428 bekannte Vorrichtung vorgeschlagen, durch welche die vorgängig erwähnten Nachteile weitgehend vermieden werden. Diese Vorrichtung weist einen mit Zentrieröffnungen versehenen und als Werkstückaufnahme bezeichneten Werkstückträger auf, dessen Zentrieröffnungen mit korrespondierend auf einem Bearbeitungstisch angeordneten Zentrierzapfen zusammenwirken. Dabei ist eine erste Gruppe von Zentrieröffnungen und Zentrierzapfen vorgesehen, welche die Lage der Werkstückaufnahme in X- und in Y-Richtung festlegt und somit den eigentlichen Nullpunkt definiert. Um die Winkellage der Werkstückaufnahme um die Z-Achse zu definieren, ist in X-Richtung eine im Abstand zur ersten Gruppe angeordnete, zweite Gruppe von Zentrieröffnungen und Zentrierzapfen vorgesehen. Um die Winkellage um die Z-Achse zusätzlich noch in Y-Richtung zu definieren, kann noch eine weitere, im Abstand zur ersten und zweiten Gruppe angeordnete, dritte Gruppe von Zentrieröffnungen und Zentrierzapfen vorgesehen sein. Durch eine solche Ausbildung der Vorrichtung wird eine bisher nicht erreichte Präzision in Bezug auf die Positioniergenauigkeit der Werkstückaufnahme erreicht, da sich beispielsweise thermische bedingte Längenänderungen der Werkstückaufnahme nicht in einem undefinierten Verschieben des Nullpunktes bemerkbar machen.

Die vorgängigen Ausführungen haben sich jeweils auf ein präzises, definiertes Zusammenarbeiten der Zentrierelemente beim Aufspannen der Vorrichtung bzw. des Werkstückträgers bezogen. Dabei wurde davon ausgegangen, dass durch ein definiertes Zusammenwirken der Zentrierelemente beim Aufspannen der Vorrichtung bzw. des Werkstückträgers automatisch auch eine entsprechend genaue Positionierung des Werkstückträgers sowie der darin eingespannten Werkstücke erreicht wird.

Nun hat sich jedoch herausgestellt, dass selbst bei einem stabilen, definierten Nullpunkt des Werkstückträgers, unter gewissen Umständen, die Position der in solchen Werkstückträgern eingespannten Werkstücke in Bezug auf die Zentrierelemente bzw. den durch die Zentrierelemente definierten Nullpunkt durchaus im Bereich von einigen hundertstel Millimetern variieren kann.

Die Ursachen dafür dürften in erster Linie in thermisch bedingten Dimensionsänderungen des Werkstückträgers und/oder des Bearbeitungstisches zu suchen sein. Durch eine Längenänderung des Werkstückträgers verschieben sich die darin eingespannten Werkstücke gegenüber dessen Nullpunkt. Je grösser die Distanz zwischen dem Nullpunkt und den im Werkstückträger eingespannten Werkstücken ist, desto grösser ist natürlich der absolute Fehler. Ausserdem verändert sich durch eine Längenänderung des Werkstückträgers auch der Abstand zwischen den einzelnen am Werkstückträger angeordneten Zentrierelementen. Eine Dimensionsänderung des Bearbeitungstisches äussert sich in einer Abstandsänderung der am Bearbeitungstisch angebrachten Zentrierzapfen oder Zentrieröffnungen. Auch der durch die am Bearbeitungstisch angeordneten Zentrierelemente bestimmte mechanische Maschinennullpunkt kann sich dadurch gegenüber dem theoretischen Maschinennullpunkt verschieben.

All dies tritt bei überbestimmten Spannsystemen, wie z.B. in der DE-PS 31 15 586 beschrieben noch in verstärktem Masse auf. Im weiteren kann sich ein unterschiedlicher Temperatur-Ausdehnungskoeffizient des Bearbeitungstisches gegenüber dem Werkstückträger in zusätzlichen Ungenauigkeiten auswirken. Kommen noch weitere Faktoren wie beispielsweise hohe Spanngewichte und/oder hohe Spannkräfte dazu, bei denen das Werkstückträgermaterial eine gewisse Nachgiebigkeit (elastische Verformung über der Zeit) aufweist, so reduziert sich die erreichbare Positionier-Genauigkeit nochmals. Dass grosse Vorrichtungen bzw. Werkstückträger darauf stärker reagieren als entsprechend kleine, versteht sich von selbst.

Im weiteren ist zu beachten, dass solche, im allgemeinen aus mehreren Teilen aufgebaute Werkstückträger aus absolut identischem Stahl gefertigt sein müssten, da Stahl aus unterschiedlichen Herstellungsserien wiederum unterschiedliche Eigenschaften bezüglich des Temperatur-Ausdehnungskoeffizienten oder der elastischen Verformbarkeit aufweisen kann.

Ferner können noch weitere, hinlänglich bekannte und sich im ungünstigsten Fall addierende Fehlerquellen die Positionsgenauigkeit sowohl des Werkstückträgers wie auch der darin eingespannten Werkstücke negativ beeinflussen. Mögliche Ursachen dafür sind:
- Toleranzen bei der Fertigung der Zentrierzapfen.
- Toleranzen bei der Fertigung der Zentrieröffnungen.
- Toleranzen beim Befestigen sowohl der Zentrierzapfen am Werkstückträger wie auch der Zentrieröffnungen am Arbeitstisch der Bearbeitungsmaschine.

Um diese Toleranzen zu minimieren, muss ein hoher Bearbeitungsaufwand betrieben werden, was sich natürlich in entsprechend hohen Kosten für die Zentrierelemente (Zapfen-Öffnungs-Paare) sowie für den gesamten Werkstückträger niederschlägt.

Um die vorgängig erwähnten Nachteile weitgehend zu vermeiden, wäre es daher vorteilhaft, wenn die Positionsreferenz des Werkstückträgers unabhängig von den Befestigungs- bzw. Spannmitteln wäre. Das heisst mit anderen Worten, dass die zwangsläufig vorhandene Ungenauigkeit beim Aufspannen eines Werkstückträgers bzw. die Diskrepanz zwischen dem theoretischen Maschinennullpunkt und dem mechanisch, durch das Zusammenwirken der Zentrierelemente bestimmten Werkstückträgernullpunkt keinen Einfluss auf die Positioniergenauigkeit bzw. Bearbeitungsgenauigkeit der im Werkstückträger eingespannten Werkstücke hat. Auch wäre es wünschenswert, die in der Herstellung sehr teuren Zentrierelemente durch einfachere zu ersetzen bzw. ganz wegzulassen. Ein weiterer Wunsch wäre schliesslich noch, allfällige Dimensionsänderungen des Werkstückträgers, bzw. allfällige Verschiebungen der eingespannten Werkstücke in Bezug auf den theoretischen Maschinennullpunkt zu erfassen und die Koordinaten der eingespannten Werkstücke in Relation zu diesen Dimensionsänderungen bzw. Verschiebungen rechnerisch zu korrigieren.

Die Druckschrift JP-A-62 226 308 betrifft ein Verfahren zur Steuerung eines Roboters, der mit einem visuellen Sensor versehen ist. Namentlich handelt es sich um die Steuerung des Greifglieds des Roboters mit Hilfe einer elektro-optischen Abbildung eines zu handhabenden Objekts in einer Initialisierungsphase, wobei die Koordinaten von am zu handhabenden Objekt angebrachten Referenzmarken erfasst werden, und um die Abtastung der Koordinaten derselben Referenzmarken mit einem Positionsdetektor während der Arbeitsphase zur jewelligen Korrektur der Greifglied-Einstellung bei wechselnder Lage der zu handhabenden gleichen Objekte. Bei der Anwendung dieser Methode zur Positionierung eines Werkstückträgers in einer Bearbeitungsmaschine würden wohl die hier geforderten Genauigkeitsansprüche (genauer als einige tausendstel bzw. hundertstel Millimeter) in keiner Weise erfüllt werden können. Eine solche Genauigkeit ist bei der Handhabung von Werkstücken durch einen Roboter auch nicht erforderlich.

Die Druckschrift "IBM Technical Disclosure Bulletin", Vol. 28, No. 8, January 1986, beschreibt ein Verfahren zum exakten Ausrichten eines Werkstückes mit Bezug auf einen einfachen Roboter. Bei diesem Verfahren wird das Werkstück auf einem Arbeitstisch verschoben, bis ein erster, konischer Passtift in eine erste Passbohrung des Werkstücks eingreift. Dann wird das Werkstück im Bereich dieser ersten Passbohrung derart fixiert, dass es um die Achse der Passbohrung verschwenkt werden kann. Anschliessend wird das Werkstück verschwenkt, bis ein zweiter, konischer Passtift in eine zweite Passbohrung des Werkstücks eingreift. Schliesslich wird das Werkstück auch im Bereich dieser zweiten Passbohrung fixiert. Auch hier treten die einleitend geschilderten Probleme auf; eine exakte Positionierung im Sinn der Erfindung erscheint kaum möglich.

Die Druckschrift DE-A-37 13 131 offenbart eine Anschlagvorrichtung zum Einrichten von Werkstücken in einer numerisch gesteuerten Draht-Funkenerosionsmaschine. Sie besteht aus zwei Teilen, die mit Nuten zur Lageprüfung von Bezugsflächen dieser Teile versehen sind. Die beiden Teile weisen ferner jeweils zwei Bezugslöcher auf und sind mit Schildern versehen, um einen Mittenabstand zwischen den Bezugslöchern und einen weiteren Abstand zwischen einerseits den Mitten der Bezugslöcher und andererseits der Bezugsfläche anzugeben. Durch Ausmessen der Bezugslöcher, deren Abstand genau bekannt ist, soll das Mass der Wärmedehnung des Anschlags bestimmt werden.

Es ist daher die Aufgabe der Erfindung, ein Verfahren zum Positionieren eines Werkstückträgers in einer Bearbeitungsmaschine vorzuschlagen, mittels welchem die Position des Werkstückträgers und damit der darin eingespannten Werkstücke in der Bearbeitungsmaschine genauer als bisher festgestellt werden kann.

Eine weitere Aufgabe der Erfindung besteht darin, einen Werkstückträger so weiterzubilden, dass dessen exakte Position innerhalb der Bearbeitungsmaschine auf einfache Weise erkennbar ist.

Zur Lösung dieser Aufgaben werden das im kennzeichnenden Teil des Anspruchs 1 aufgeführte Verfahren sowie die im kennzeichnenden Teil des Anspruchs 17 aufgeführten Merkmale vorgeschlagen.

Schliesslich wird in Anspruch 25 noch eine Verwendung für einen solchen Werkstückträger vorgeschlagen.

Durch ein solches, im Anspruch 1 beschriebenes Verfahren wird erreicht, dass die Position des Werkstückträgers erstmals unabhängig von Toleranzen der Spann- und Zentrierelemente definiert ist, bzw. bestimmt werden kann.

In einer bevorzugten Weiterbildung des Verfahrens ist zudem vorgesehen, dass zusätzlich nach dem Fixieren des Werkstückträgers am Bearbeitungsort und vor der eigentlichen Bearbeitung der Werkstücke, die Distanz(en) zwischen den Referenzmarken ermittelt wird/werden, und dass bei einer bestimmten Veränderung dieser Distanz, seit dem Ausmessen am Messplatz, die Position(en) der eingespannten Werkstücke, in Relation zu der Veränderung, rechnerisch von der Bearbeitungsmaschine in X- und/oder In Y-Richtung korrigiert wird. Dadurch können die Auswirkungen von beispielsweise thermische bedingten Längenänderungen des Werkstückträgers weitgehend kompensiert werden.

Durch das Vorhandensein von zwei in horizontalem Abstand voneinander angebrachten Referenzmarken am Werkstückträger kann dessen Ist-Position, sowohl in X- und in Y-Richtung wie auch bezüglich seiner Winkellage um die Z-Achse, sehr genau erfasst werden. Dadurch können die Spannelemente, welche gleichzeitig als Zentrierelemente dienen, viel einfacher und damit der gesamte Werkstückträger wesentlich kotengünstiger gefertigt werden, ohne dass die Spanngenauigkeit darunter leidet.

Bei einer bevorzugten Ausführungsform des Werkstückträgers ist zudem vorgesehen, dass der eigentliche Spannrahmen einstückig ausgebildet ist. Eine solche Ausgestaltung hat den Vorteil, dass der ganze Rahmen aus demselben Material gefertigt ist, dass also keine unterschiedlichen Materialien mit unterschiedlichen Eigenschaften eingesetzt werden, und dass auch keine Toleranzen durch den Zusammenbauen des Rahmens entstehen.

Nachfolgend wird das vorgeschlagene Verfahren und ein Ausführungsbeispiel des erfindungsgemässen Werkstückträgers anhand von Zeichnungen näher erläutert. In den Zeichnungen zeigen:
- Fig.1: eine Ansicht von oben auf einen Werkstückträger;
- Fig.2: eine Seiten-Ansicht des Werkstückträgers in einem Längsschnitt entlang der Linie A-A in Fig. 1, ohne eingespannte Werkstücke;
- Fig.3: eine Seiten-Ansicht des Werkstückträgers in einem Querschnitt entlang der Linie B-B in Fig. 1 ohne eingespannte Werkstücke; und
- Fig.4: eine schematische Ansicht einer Mess- und Rüstzelle sowie einer Drahterodiermaschine, jeweils mit aufgespanntem und bestücktem Werkstückträger, und eines Rechners.

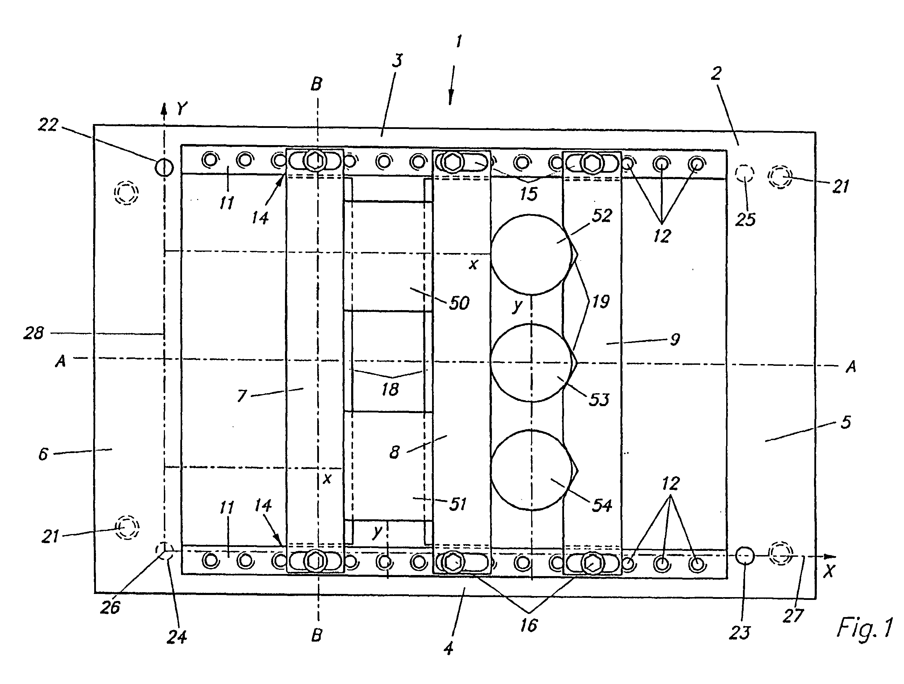

Fig. 1 zeigt einen beispielhaften Werkstückträger 1 in einer Ansicht von oben. Der Werkstückträger 1 besteht im wesentlichen aus einem einstückigen, rechteckigen Spannrahmen 2 mit zwei Längsseiten 3, 4 und zwei Stirnseiten 5, 6 sowie mehreren Spannleisten 7, 8, 9. Zwischen der ersten Spannleiste 7 und der zweiten Spannleiste 8 sind zwei quaderförmige Werkstücke 50, 51 und zwischen der zweiten Spannleiste 8 und der dritten Spannleiste 9 drei zylinderförmige Werkstücke 52, 53, 54 eingespannt. Die beiden Längsseiten 3, 4 weisen entlang ihren Innenseiten jeweils eine stufenförmige Vertiefung 11 mit eingelassenen Gewindebohrungen 12 auf. Um die drei eingezeichneten Spannleisten 7, 8, 9 arretieren zu können, besitzen diese auf beiden Seiten einen Tragarm 14 mit je einem ausgeformten Längsschlitz 15. Die Spannleisten 7, 8, 9 liegen mit diesen Tragarmen 14 in den Vertiefungen 11 der Längsseiten 3, 4 auf, und sind mittels in die Gewindebohrungen 12 der Längsseiten 3, 4 eingeschraubten Schrauben 16 darin fixiert. Zwei der drei Spannleisten 7, 8 besitzen an ihrem unteren Ende einen Anschlag 18, auf welchen die Werkstücke 50, 51 beim Einspannen aufliegen. Die dritte Spannleiste 9 besitzt V-förmige Aussparungen 19, in welchen runde Körper 52, 53, 54 fixiert werden können. Diese drei Spannleisten 7, 8, 9 stellen dabei keine ausschliesslichen Ausführungsbeipiele dar.

Beim hier gezeigten Ausführungsbeispiel weist der Werkstückträger 1 auf seiner Unterseite vier durch unterbrochen eingezeichnete Linien 21 angedeutete Spannelemente zur Fixierung des Werkstückträgers 1 in einer Mess- und Rüstzelle sowie in der Bearbeitungsmaschine auf. Der Abstand zwischen den beiden an der linken Stirnseite 6 angeordneten Spannelementen 21 ist dabei kleiner als der Abstand zwischen den beiden an der rechten Stirnseite 5 angeordneten Spannelementen 21. Der Werkstückträger 1 wird durch diese Spannelemente 21 beim Aufspannen grob zentriert und durch deren asymmetrische Anordnung eindeutig ausgerichtet. Vom Prinzip her sind solchermassen ausgebildete Werkstückträger 1 bekannt, weshalb an dieser Stelle nicht näher darauf eingegangen werden muss. Die Anordnung und das Prinzip der hier dargestellten Spannelemente 21 stellen lediglich ein mögliches Ausführungsbeispiel dar. Es sind natürlich noch unzählige weitere Varianten denkbar. Beispielsweise wäre es auch möglich, gänzlich auf am Werkstückträger angebrachte Spann- und/oder Zentrierelemente zu verzichten und diese maschinenseitig vorzusehen.

Wesentlich am hier dargestellten Werkstückträger 1 ist jedoch, dass beide Stirnseiten 5, 6 des Spannrahmens 2 je eine Referenzmarke in Form einer Durchgangsbohrung 22, 23 aufweisen. Diese beiden Bohrungen 22, 23 liegen einander diagonal gegenüber und sind im Bereich von zwei Ecken des Spannrahmens 2 angeordnet. Die Bohrungen 22, 23 dienen als Referenzmarken und definieren die Lage des Werkstückträgers 1 in X- und in Y-Richtung sowie bezüglich seiner Winkellage um die Z-Achse. Im weiteren sind in den beiden anderen Ecken des Spannrahmens 2 noch zwei weitere Bohrungen durch unterbrochen dargestellte Kreise 24, 25 angedeutet. Dadurch soll die Möglichkeit aufgezeigt werden, dass der Spannrahmen 2 durchaus auch drei, vier oder noch mehr Bohrungen aufweisen kann.

Ein durch die beiden Bohrungen 22, 23 definiertes Koordinatensystem 26 ist durch eine schematisch eingezeichnete Abszisse 27 sowie eine entsprechende Ordinate 28 angedeutet. Zur Veranschaulichung der Position(en) der eingespannten Werkstücke 50, 51, 52, 53, 54 bezüglich des eingezeichneten Koordinatensystems 26 ist vom einen quaderförmigen Werkstück 51 eine mit x bezeichnete Linie zur Ordinate 28 und eine mit y bezeichnete Linie zur Abszisse 27 eingezeichnet. Sinngemäss sind äquivalente Linien für das oberste, zylinderförmige Werkstück 52 eingezeichnet.

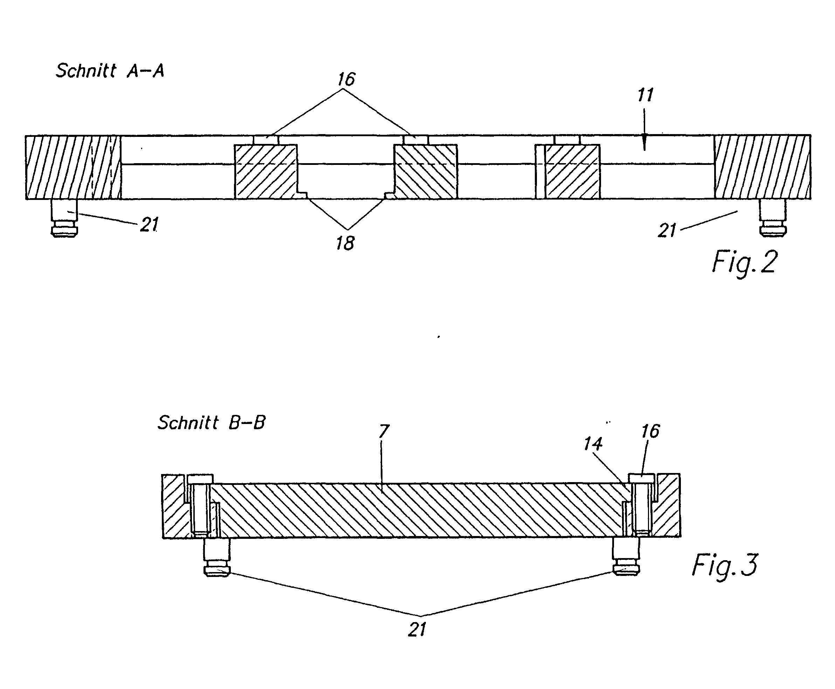

In der Fig. 2 ist der Werkstückträger 1 in einer Seitenansicht im Schnitt entlang der in Fig. 1 eingezeichneten Linie A-A dargestellt. Die in Fig. 1 eingezeichneten Werkstücke sowie diverse verdeckte Linien wurden in dieser Darstellung zugunsten einer besseren Übersichtlichkeit weggelassen. Im weiteren sind zwei der vier nach unten abstehenden Spannelemente 21 ersichtlich. Diese Spannelemente 21 dienen dem Aufspannen und Fixieren des Werkstückträgers 1, wobei das eigentliche Spannen mechanisch, vorzugsweise durch Federkraft, und das Lösen pneumatisch erfolgen. Dadurch wird sichergestellt, dass auch im Falle eines Lecks im pneumatischen System oder bei einem Stromunterbruch, der Werkstückträger fixiert bleibt. Die Spannvorrichtung ist dabei selbsthemmend ausgelegt, so dass, selbst bei einem Druckabfall, der Werkstückträger 1 sicher in seiner Position festgehalten wird.

Fig. 3 zeigt den Werkstückträger 1 schliesslich noch in einem zweiten Schnitt entlang der Linie B-B in Fig. 1. Aus dieser Darstellung ist die eine Spannleiste 7 im Profil ersichtlich.

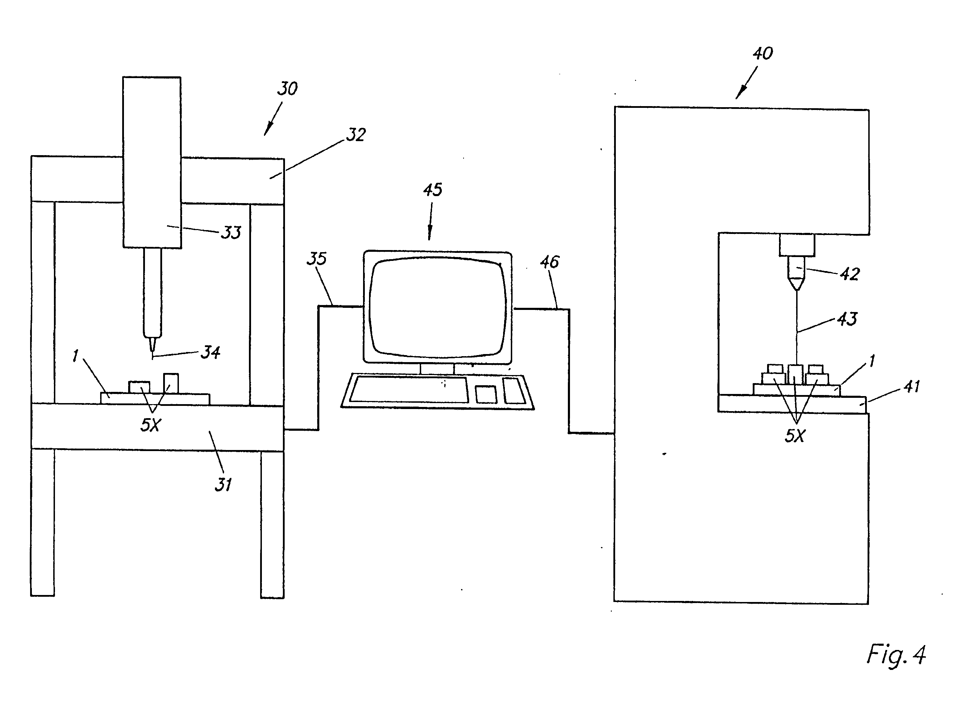

Aus der Fig. 4 ist, jeweils in schematischer Darstellung, ein Messplatz in Form einer Mess- und Rüstzelle 30, eine Drahterodiermaschine 40 in einer Seitenansicht sowie ein Rechner 45 ersichtlich. Die Mess- und Rüstzelle 30 dient, wie der Name schon sagt, dem Bestücken des Werkstückträgers 1 und dem Erfassen der Positionen der im Werkstückträger 1 eingespannten Werkstücke 5X. Da solche Mess- und Rüstzellen 30 sowie das zugehörige Verfahren zum Ermitteln der Werkstückpositionen an und für sich bekannt sind und mit der eigentlichen Erfindung nicht in unmittelbarem Zusammenhang stehen, beschränken sich die nachfolgenden Erläuterungen auf das Wesentliche.

Die dargestellte Mess- und Rüstzelle 30 umfasst im wesentlichen einen Messtisch 31 sowie einen an einem Rahmen 32 abgestützten Messarm 33 mit endig angebrachtem Messtaster 34. Der zum Betrieb einer solchen Mess- und Rüstzelle 30 notwendige Rechner 45 ist über eine symbolisch dargestellte Datenleitung 35 mit der Messund Rüstzelle 30 verbunden. Der Messarm 33 ist in X- Y- und Z-Richtung verschiebbar, wobei die jeweilige Auslenkung des Messarms 33 in X- und Y-Richtung durch eingebaute Messmittel sehr genau gemessen und erfasst werden kann. Um eine genaue, definierte Positionierung des Werkstückträgers 1 in Z-Richtung zu erreichen, sind am Messtisch 31, vorzugsweise im Bereich der angeordneten Spannvorrichtung zum Aufspannen des Werkstückhalters 1, Auflageflächen angeordnet. Auf diesen Auflageflächen liegt der Spannrahmen beim Aufspannen mit seiner planen Unterseite auf. Daher braucht die Auslenkung des Messarms 33 in Z-Richtung nicht erfasst zu werden. Die Auslenkung des Messarms 33 in X- und in Y-Richtung jedoch kann mittels des Rechners 45 digital erfasst, verarbeitet, aufbereitet und abgespeichert werden.

Vorzugsweise vor dem Ausmessen der eigentlichen Werkstückpositionen, welche durch mehrere schematisch eingezeichnete Werkstücke 5X angedeutet sind, werden die Positionen der im Werkstückträger 1 vorhandenen Referenzbohrungen ermittelt. Dazu wird der Messtaster 34 in die jeweilige Bohrung eingeführt und deren Bohrungswand an zumindest drei, vorzugsweise um 90 bis 150° versetzten Punkten angefahren. Sobald der Messtaster 34 die Bohrungswand berührt, wird die jeweilige Position des Messarms 33 gegenüber einem Messzellen-Nullpunkt (Referenz) in X- und Y Richtung festgestellt und abgespeichert. Durch das Abtasten von drei Punkten kann das jeweilige Bohrungszentrum eindeutig bestimmt werden. Anschliessend wird rechnerisch ein durch die Lage der beiden Bohrungen bzw. deren Zentren definiertes virtuelles Koordinatensystem über den Werkstückträger 1 gelegt. Nun können die Positionen bzw. Koordinaten der im Werkstückträger 1 eingespannten Werkstücke 5X bezüglich des virtuellen Koordinatensystems ermittelt werden. Dazu wird der Messtaster 34 von zumindest zwei Seiten, jeweils um 90° versetzt, an die eingespannten Werkstücke 5X herangeführt, und die jeweilige Position des Messarms 33 beim Berühren der Werkstücke 55 in X- und in Y Richtung festgehalten und abgespeichert. Auf diese Weise werden sämtliche Positionen bzw. Koordinaten der eingespannten Werkstücke 55 ermittelt und in Bezug auf das durch die Lage der beiden Bohrungen definierte, virtuelle Koordinatensystem erfasst. Dieser gesamte Messablauf wird dabei, vorzugsweise menugeführt, durch den Rechner 45 gesteuert und die Messdaten auf letzterem abgespeichert.

Als Bearbeitungsmaschine kommt in diesem Ausführungsbeispiel eine Drahterodiermaschine 40 zum Einsatz. Die wesentlichen aus dieser Darstellung ersichtlichen Bestandteile dieser Drahterodiermaschine 40 sind ein Bearbeitungstisch 41, ein in X- und Y-Richtung beweglicher Drahtführungskopf 42 sowie der eigentliche Erodierdraht 43. Die Drahterodiermaschine 40 ist zudem über eine Datenleitung 46 mit dem Rechner 45 verbunden.

Zur Erläuterung des nachfolgend beschriebenen Verfahrens zum Positionieren des Werkstückträgers 1 auf der Bearbeitungsmaschine 40 wird zusätzlich zur Fig. 4 auf die Fig. 1 Bezug genommen. Es versteht sich dabei von selbst, dass das erfindungsgemässe bzw. ein äquivalentes Verfahren auch auf einer beliebig anderen Bearbeitungsmaschine als der nachfolgend beschriebenen Drahterodiermaschine 40 eingesetzt werden kann.

Nachdem in der Mess- und Rüstzelle 30 die Lage der im Werkstückträger 1 eingespannten Werkstücke 50, 51, 52, 53, 54 in Bezug auf die beiden Referenzbohrungen 22, 23 ermittelt worden ist, werden die Werkstück-Koordinaten, bezogen auf das virtuelle Koordinatensystem, abgespeichert und, beispielsweise über eine Netzwerkverbindung bzw. über die Datenleitung 46, auf die Bearbeitungsmaschine(n) 40 übertragen. Anschliessend wird der Werkstückträger 1 ausgespannt, an den Bearbeitungsort transportiert und auf dem Bearbeitungstisch 41 der Drahterodiermaschine 40 durch Aufspannen unverrückbar in seiner Lage fixiert. Eine genaue Positionierung des Werkstückträgers 1 in Richtung der Z-Achse wird auch hier wiederum durch das Zusammenwirken von am Bearbeitungstisch 41 angeordneten Auflageflächen mit der planen Spannrahmenunterseite gewährleistet. Durch die am Werkstückträger 1 angeordneten Spannelemente 21 wird der Werkstückträger 1 in X- und in Y-Richtung grob positioniert und auf einige Zehntelsmillimeter genau ausgerichtet. Sollte der Wunsch bestehen, den Werkstückträger 1 genauer auszurichten, könnten natürlich noch zusätzliche Zentrierelemente angeordnet werden. Da die Lage der Referenzbohrungen 22, 23 in Bezug auf die Spannelemente 21 jedoch bekannt ist, genügt eine Aufspanngenauigkeit von einigen Zehntelsmillimetern, damit die Drahterodiermaschine 40 die Referenzbohrungen 22, 23 anfahren und den Erodierdraht 43 in bekannter Weise, z.B. mittels eines Wasserstrahls, durch die Referenzbohrung 22, 23 hindurchführen und auf deren Unterseite durch vorhandene, bekannte Mittel greifen und spannen kann.

Nach dem Einführen und Spannen des Erodierdrahtes 43 wird die Bohrungswandung wiederum an drei jeweils um 90 bis 150° versetzten Punkten angefahren. Durch eine Messung des Widerstandes zwischen dem Erodierdraht 43 und dem Werkstückträger 1 kann sehr genau festgestellt werden, an welchem jeweiligen Punkt, bzw. bei welcher Auslenkung des Drahtführungskopfes 42, der Erodierdraht 43 die Bohrungswandung berührt. Mittels dieser Methode kann somit der Bohrungsmittelpunkt äusserst präzise bestimmt bzw. errechnet werden. Diese Methode hat zudem den grossen Vorteil, dass die Referenzpunkte direkt mit dem "Bearbeitungswerkzeug" ausgemessen werden und dass dadurch die Fehlermöglichkeiten minimiert sowie mechanische Toleranzen ausgeschaltet werden. Nach dem Ermitteln des zweiten und allenfalls dritten oder vierten Referenzbohrungsmittelpunktes ist das virtuelle Koordinatensystem 26 des Werkstückträgers 1 von der Bearbeitungsmaschine erkannt worden. Dadurch kann dieses virtuelle Koordinatensystem 26 zusammen mit den am Messplatz ermittelten Werkstück-Koordinaten dem Bearbeitungsmaschinen-Koordinatensystem überlagert werden, wodurch der Drahterodiermaschine 40 die genauen Positionen der eingespannten Werkstücke 50, 51, 52, 53, 54 in Bezug auf ihre X- und Y-Referenzachsen sowie bezüglich der Winkellage um die Z-Achse bekannt sind und der eigentliche Bearbeitungsprozess beginnen kann.

Damit ein solches Verfahren durchgeführt werden kann, ist es natürlich erforderlich, dass die Bearbeitungsmaschine 40 über entsprechende Software verfügt. Da solche Programme jedoch bekannt sind, kann an dieser Stelle auf deren nähere Beschreibung verzichtet werden. Der Datenaustausch zwischen der Mess- und Rüstzelle 30 und der Bearbeitungsmaschine 40 kann natürlich auch mittels eines Datenträgers, beispielsweise in Form einer Diskette, erfolgen, sofern die Bearbeitungsmaschine 40 über ein entsprechendes Lesegerät bzw. Laufwerk verfügt.

Das erfindungsgemässe Verfahren stellt somit sicher, dass, unabhängig von gewissen unvermeidlichen Toleranzen beim Herstellen sowie Aufspannen und Ausrichten des Werkstückträgers 1, die Positionen der einzelnen Werkstücke 50, 51, 52, 53, 54 mit einem Höchstmass an Genauigkeit vor Beginn des Bearbeitungsprozesses bekannt sind.

Nachfolgend sollen noch einige weitere, keinesfalls abschliessende Möglichkeiten aufgezeigt werden, die ein solches oder ein davon abgeleitetes, erweitertes Verfahren bietet.

Mit drei Referenzbohrungen kann die dritte Bohrung als Kontrollbohrung mit-ausgemessen und das virtuelle Koordinatensystem "ausgemittelt" werden.

Weist der Werkstückträger 1 beispielsweise vier Referenzbohrungen auf, so können dadurch auch allfällige nicht lineare Längenänderungen des Werkstückträgers 1 ermittelt und die Werkstückkoordinaten entsprechend korrigiert werden.

Die Anordnung der Referenzbohrungen ist natürlich frei wählbar. So wäre es beispielsweise auch möglich, die Bohrungen an den Spannleisten anzubringen. Dies hätte den Vorteil, dass die Bohrungen näher bei den Werkstücken angeordnet wären.

Bei einer besonderen Variante des Verfahrens ist vorgesehen, den Nullpunkt des virtuellen Koordinatensystems in die Mitte des Werkstückträgers 1 zu legen. Auf diese Weise wird erreicht, dass allfällige Längenänderungen des Werkstückträgers 1, bezogen auf dessen Nullpunkt, nur mit maximal 50% der gesamten Längenänderung die Genauigkeit beeinflussen.

In einer bevorzugten Weiterbildung des Verfahrens ist zudem vorgesehen, dass nach dem Fixieren des Werkstückträgers 1 in der Bearbeitungsmaschine 40 die Distanz(en) zwischen den Referenzmarken 22, 23 ermittelt und mit der am Messplatz 30 ermittelten Distanz verglichen wird/werden, und dass bei einer bestimmten Veränderung dieser Distanz die Position(en) der eingespannten Werkstücke 50, 51, 52, 53, 54, in Relation zu der Veränderung, rechnerisch von der Bearbeitungsmaschine 40 korrigiert wird. Dadurch können die Auswirkungen von beispielsweise thermisch bedingten Längenänderungen des Werkstückträgers 1 sowohl in X- und/oder in Y- Richtung weitgehend kompensiert werden.

Eine weitere Variante des Verfahrens sieht vor, die am Messplatz 30 ermittelten Koordinaten auf ein am Werkstückträger 1 angeordnetes, elektronisches Speichermedium zu übertragen. Als Speichermedium dieser Art eignen sich Halbleiterelemente oder Magnetstreifen, die die Informationen energiefrei abspeichern können. Die Datenübertragung vom Halbleiterspeicher oder Magnetstreifen auf ein entsprechendes Lesegerät erfolgt vorzugsweise berührungslos, beispielsweise über ein Trägerfrequenzsystem, währenddem für die Energieübertragung ein induktives Wechselfeld vorgesehen ist. Durch solche Speicherelemente ist eine sichere, verwechslungsfrei Zuordnung der Daten zu den eingespannten Werkstücken möglich.

Zusammenfassend kann festgehalten werden, dass durch ein Festhalten der Position jedes Werkstücks bezüglich zweier Referenzmarken im Werkstückträger beim Aufspannen des Werkstückträgers nicht so sehr auf höchstmögliche Genauigkeit in X und Y-Richtung geachtet werden muss. Mit anderen Worten heisst das, der Werkstückträger kann "ungenau" aufgespannt werden, da mittels der beiden Referenzbohrungen die "Ungenauigkeit" festgestellt werden kann. Auf diese Weise können natürlich viel einfachere Aufspanneinrichtungen zum Einsatz kommen, die wesentlich billiger herzustellen sind.

Ein nicht unwichtiges Element bei einem solchen Verfahren ist die Software, da diese einen mitentscheidenden Einfluss auf Korrekturmöglichkeiten und Genauigkeit hat. Mit einem entsprechenden Softwareaufwand kann jedoch die Lage des virtuellen Koordinatensystems und damit die Lage der im Werkstückträger eingespannten Werkstücke mit nahezu beliebiger Genauigkeit bestimmt werden.

Der Vollständigkeit halber sei noch erwähnt, dass anstelle von Referenzmarken in Form von Bohrungen natürlich auch beliebig andere Referenzmarken, beispielsweise in Form von Erhebungen, Vertiefungen, Schlitzen, optischen Markierungen und dergleichen, Verwendung finden können.

## Patentansprüche

1. Verfahren zum Positionieren eines Werkstückträgers und darauf eingespannter Werkstücke in einer Bearbeitungsmaschine, **dadurch gekennzeichnet**,
a) dass zunächst an einem Messplatz (30) die Koordinaten jedes im Werkstückträger (1) eingespannten Werkstücks (50, 51, 52, 53, 54) in Bezug auf ein am Werkstückträger durch zumindest zwei, in horizontalem Abstand voneinander am Werkstückträger (1) angebrachter Referenzmarken (22, 23) definiertes, virtuelles Koordinatensystem (26) ausgemessen und erfasst werden,
b) dass der Werkstückträger (1) danach auf dem Bearbeitungstisch der Bearbeitungsmaschine in eine zumindest annähernd der Soll-Position entsprechende Position gebracht und fixiert und anschliessend dessen Ist-Position durch Abtastung der Referenzmarken (22, 23) in Bezug auf zumindest eine Referenzachse der Bearbeitungsmaschine (40), ermittelt und gespeichert wird, und
c) dass das durch die Referenzmarken (22, 23) definierte, virtuelle Koordinatensystem (26) zusammen mit den Koordinaten der im Werkstückträger (1) eingespannten Werkstücke (50, 51, 52, 53, 54), rechnerisch dem Koordinatensystem der Bearbeitungsmaschine (40) überlagert wird.

2. Verfahren nach Anspruch 1, **dadurch gekennzeichnet, dass** am Messplatz zusätzlich die Distanz(en) zwischen den Referenzmarken (22, 23) ermittelt und erfasst wird/werden.

3. Verfahren nach Anspruch 1, **dadurch gekennzeichnet, dass** die Position des Werkstückträgers (1) in Z-Richtung mechanisch bestimmt wird.

4. Verfahren nach Anspruch 1, **dadurch gekennzeichnet, dass** die Position des Werkstückträgers (1) in Z-Richtung mittels zumindest zweier in vertikalem Abstand angebrachter Referenzmarken bestimmt wird.

5. Verfahren nach einem der vorhergehenden Ansprüche, **dadurch gekennzeichnet, dass** die Positionen der Referenzmarken (22, 23) am Messplatz (30) mechanisch oder optisch abgetastet werden.

6. Verfahren nach Anspruch 5, **dadurch gekennzeichnet, dass** das Ausmessen der Position(en) des Werkstücks bzw. der Werkstücke (50, 51, 52, 53, 54) am Messplatz mittels eines Messtasters erfolgt, welcher das/die Werkstück(e) (50, 51, 52, 53, 54) an zumindest zwei unter einem Winkel von 90° versetzten Punkten anfährt.

7. Verfahren nach Anspruch 5, **dadurch gekennzeichnet, dass** das Ausmessen der Position(en) des Werkstücks bzw. der Werkstücke (50, 51, 52, 53, 54) optisch, beispielsweise mittels eines Laserstrahls, erfolgt, wobei jedes Werkstück (50, 51, 52, 53, 54) an zumindest zwei unter einem Winkel von 90° versetzten Punkten abgetastet wird.

8. Verfahren nach einem der vorhergehenden Ansprüche, bei welchem als Bearbeitungsmaschine eine Drahterodiermaschine (40) eingesetzt wird, **dadurch gekennzeichnet, dass** die Positionen der vorzugsweise durch Bohrungen gebildeten Referenzmarken (22, 23) mittels des Erodierdrahtes (43) ausgemessen werden.

9. Verfahren nach Anspruch 8, **dadurch gekennzeichnet, dass** zur Ermittlung der Lage des Bohrungsmittelpunktes die Bohrungswände durch den Erodierdraht (43) an zumindest drei, vorzugsweise um 90 bis 150° versetzten Punkten angefahren werden, wobei jeweils die Position des Erodierdrahtes (43) bei dessen Berührung mit der Bohrungswand erfasst und daraus die Lage des Mittelpunkts errechnet wird.

10. Verfahren nach einem der vorhergehenden Ansprüche, **dadurch gekennzeichnet, dass** nach dem Fixieren des Werkstückträgers (1) in der Bearbeitungsmaschine (40) zusätzlich die Distanz(en) zwischen den Referenzmarken (22, 23) ermittelt und mit der/den am Messplatz (30) gemessenen Distanz(en) verglichen wird/werden, und dass bei einer vorbestimmten Abweichung dieser Werte die Koordinaten jedes eingespannten Werkstücks (50, 51, 52, 53, 54) bezüglich des virtuellen Ursprungs, in Relation zur gemessenen Abweichung der Referenzmarken (22, 23), rechnerisch an der Bearbeitungsmaschine (40) in X- und/oder in Y-Richtung korrigiert werden.

11. Verfahren nach einem der vorhergehenden Ansprüche, **dadurch gekennzeichnet, dass** der virtuelle Ursprung des virtuellen Koordinatensystems in etwa in die Mitte einer die beiden Referenzmarken (22, 28) verbindenden Geraden gelegt wird.

12. Verfahren nach Anspruch 1 oder 2, **dadurch gekennzeichnet, dass** die am Messplatz (30) erfassten Werte mittels einer Schnittstelle (46), beispielsweise über ein Netzwerk, auf die Bearbeitungsmaschine (40) übertragen werden.

13. Verfahren nach Anspruch 1 oder 2, **dadurch gekennzeichnet, dass** die am Messplatz (30) erfassten Messwerte auf ein Speichermedium überbragen und durch ein an der Bearbeitungsmaschine (40) angebrachtes Lesegerät in diese eingelesen werden.

14. Verfahren nach Anspruch 1 oder 2, **dadurch gekennzeichnet, dass** die am Messplatz (30) erfassten Werte auf ein am Werkstückträger (1) anbringbares Speichermedium übertragen werden.

15. Verfahren nach Anspruch 14 **dadurch gekennzeichnet, dass** die Messwerte mittels eines an der Bearbeitungsmaschine (40) angebrachten Lesegerätes berührungslos vom Speichermedium abgerufen und in die Bearbeitungsmaschine (40) eingelesen werden.

16. Verfahren nach einem der vorhergehenden Ansprüche, **dadurch gekennzeichnet, dass** der Werkstückträger (1) am Messplatz (30) und/oder in der Bearbeitungsmaschine (40) mechanisch, vorzugsweise durch Federkraft, fixiert und pneumatisch gelöst wird.

17. Werkstückträger (1) zur Durchführung des in einem der vorangehenden Ansprüche umschriebenen Verfahrens, zum Einspannen von einem oder mehreren Werkstück(en) (50, 51, 52, 53, 54), wobei der Werkstückträger (1) zum Bearbeiten des/der Werkstück(e) (50, 51, 52, 53, 54) auf einem Bearbeitungstisch (41) einer Bearbeitungsmaschine (40) fixierbar ist und einen Spannrahmen (2) mit zumindest einem Anschlag für die Z-Achsen Positionierung des Werkstückträgers (1) sowie zumindest zwei in horizontalem Abstand voneinander angebrachte Positions-Referenzmarken (22, 23) aufweist, **dadurch gekennzeichnet, dass** der Werkstückträger (1) mit zumindest drei Referenzmarken (22, 23; 24; 25) zum Erfassen seiner Lage sowohl in X- und in Y-Richtung wie auch bezüglich seiner Winkellage um die Z-Achse versehen ist der Werkstückträger (1) Spannelemente (21) zum Fixieren im Messplatz (30) bzw. in der Bearbeitungsmaschine (40) aufweist, und dass die Spannelemente (21) gleichzeitig als Zentrierelemente zum zumindest groben Zentrieren und eindeutigen Ausrichten des Werkstückträgers (1) auf der Bearbeitungsmaschine (40) ausgebildet sind.

18. Werkstückträger (1) nach Anspruch 17, **dadurch gekennzeichnet, dass** zwei der Referenzmarken (22, 23) am Werkstückträger (1) diagonal einander gegenüberliegend angeordnet sind.

19. Werkstückträger (1) nach Anspruch 17 oder 18, **dadurch gekennzeichnet, dass** dieser eine zumindest annähernd rechteckige Form aufweist und die Referenzmarken (22, 23, 24, 25) im Bereich der Ecken angeordnet sind.

20. Werkstückträger (1) nach einem der Ansprüche 17 bis 19, **dadurch gekennzeichnet, dass** die Referenzmarken durch Bohrungen (22, 23, 24, 25) gebildet sind.

21. Werkstückträger (1) nach einem der Ansprüche 17 bis 20, **dadurch gekennzeichnet, dass** dessen Unterseite bzw. die Unterseite des Spannrahmens (2) zur Z-Achsen-Positionierung zumindest eine Anlagefläche aufweist, welche mit korrespondierend an der Bearbeitungsmaschine (40) bzw. an deren Bearbeitungstisch (41) vorhandenen Auflageflächen zusammenzuarbeiten bestimmt ist bzw. sind.

22. Werkstückträger (1) nach Anspruch 17, **dadurch gekennzeichnet, dass** der Spannrahmen (2) einstückig ausgebildet ist.

23. Werkstückträger (1) nach einem der Ansprüche 17 bis 22, **dadurch gekennzeichnet, dass** dieser einen Datenträger zur Speicherung der Werkstückposition(en) bzw. Koordinaten und gegebenenfalls weiterer Daten aufweist.

24. Werkstückträger (1) nach einem der Ansprüche 17 bis 23, **dadurch gekennzeichnet, dass** dieser zusätzlich zumindest zwei in horizontalem Abstand voneinander angebrachte Referenzmarken zum Erfassen seiner Lage in Z-Richtung aufweist.

25. Verwendung eines Werkstückträgers (1), welcher gemäss einem der Ansprüche 17 bis 24 ausgebildet ist, als Aufspannrahmen für Werkstücke (50, 51, 52, 53, 54) in Werkzeugmaschinen, insbesondere in Draht-Erodiermaschinen (40).

## Claims

1. Method of positioning a workpiece holder and workpieces mounted thereupon in a processing machine, **characterized**
a) in that firstly the coordinates of each workpiece (50, 51, 52, 53, 54) mounted in the workpiece holder (1) are measured and captured at a measuring station (30) with respect to a system of virtual coordinates (26) defined on the workpiece holder by at least two reference marks (22, 23) made at a horizontal distance from each other on the workpiece holder (1),
b) in that the workpiece holder (1) is then brought into a position corresponding at least approximately to the desired position on the processing bench of the processing machine and is fixed and subsequently its actual position is determined by sensing the reference marks (22, 23) with respect to at least one reference axis of the processing machine (40) and is stored, and
c) in that the system of virtual coordinates (26) defined by the reference marks (22, 23), together with the coordinates of the workpieces (50, 51, 52, 53, 54) mounted in the workpiece holder (1), is computationally overlaid on the system of coordinates of the processing machine (40).

2. Method according to Claim 1, **characterized in that** the distance(s) between the reference marks (22, 23) is/are additionally determined and captured at the measuring station.

3. Method according to Claim 1, **characterized in that** the position of the workpiece holder (1) in the Z direction is determined mechanically.

4. Method according to Claim 1, **characterized in that** the position of the workpiece holder (1) in the Z direction is determined by means of at least two reference marks made a vertical distance apart.

5. Method according to one of the preceding claims, **characterized in that** the positions of the reference marks (22, 23) are sensed mechanically or optically at the measuring station (30).

6. Method according to Claim 5, **characterized in that** the measuring of the position(s) of the workpiece or of the workpieces (50, 51, 52, 53, 54) at the measuring station takes place by means of a measuring feeler which moves up to the workpiece(s) (50, 51, 52, 53, 54) at at least two points offset at an angle of 90°.

7. Method according to Claim 5, **characterized in that** the measuring of the position(s) of the workpiece or of the workpieces (50, 51, 52, 53, 54) takes place optically, for example by means of a laser beam, each workpiece (50, 51, 52, 53, 54) being sensed at at least two points offset at an angle of 90°.

8. Method according to one of the preceding claims, in which a wire spark eroding machine (40) is used as the processing machine, **characterized in that** the positions of the reference marks (22, 23), preferably formed by bore holes, are measured by means of the eroding wire (43).

9. Method according to Claim 8, **characterized in that**, for determining the position of the bore hole centre point, the eroding wire (43) moves to the bore-hole walls at at least three points, preferably offset by 90 to 150°, the position of the eroding wire (43) being captured each time it makes contact with the bore-hole wall and the position of the centre point being calculated from this.

10. Method according to one of the preceding claims, **characterized in that**, after the fixing of the workpiece holder (1) in the processing machine (40), the distance(s) between the reference marks (22, 23) is/are additionally determined and compared with the distance(s) measured at the measuring station (30), and **in that**, if there is a predetermined deviation between these values, the coordinates of each mounted workpiece (50, 51, 52, 53, 54) are computationally corrected on the processing machine (40) in the X direction and/or in the Y direction with respect to the virtual origin, in relation to the measured deviation between the reference marks (22, 23).

11. Method according to one of the preceding claims, **characterized in that** the virtual origin of the system of virtual coordinates is positioned approximately in the centre of a straight line joining the two reference marks (22, 23).

12. Method according to Claim 1 or 2, **characterized in that** the values captured at the measuring station (30) are transferred to the processing machine (40) by means of an interface (46), for example via a network.

13. Method according to Claim 1 or 2, **characterized in that** the measured values captured at the measuring station (30) are transferred to a storage medium and are read into the processing machine (40) by a reader fitted on the said machine.

14. Method according to Claim 1 or 2, **characterized in that** the values captured at the measuring station (30) are transferred onto a storage medium which can be fitted on the workpiece holder (1).

15. Method according to Claim 14, **characterized in that** the measured values are called up contactlessly from the storage medium by means of a reader fitted on the processing machine (40) and are read into the processing machine (40).

16. Method according to one of the preceding claims, **characterized in that** the workpiece holder (1) is fixed mechanically, preferably by spring force, at the measuring station (30) and/or in the processing machine (40) and is released pneumatically.

17. Workpiece holder (1) for carrying out the method outlined in one of the preceding claims, for mounting one or more workpiece(s) (50, 51, 52, 53, 54), the workpiece holder (1) being able to be fixed on a processing bench (41) of a processing machine (40) for the processing of the workpiece(s) (50, 51, 52, 53, 54) and the said workpiece holder having a clamping frame (2) with at least one stop for the Z-axis positioning of the workpiece holder (1) as well as at least two position reference marks (22, 23) made at a horizontal distance from each other, **characterized in that** the workpiece holder (1) is provided with at least three reference marks (22, 23; 24; 25) for capturing its position both in the X and Y directions and with respect to its angular position about the Z axis, the workpiece holder has clamping elements (21) for the fixing in the measuring station (30) or in the processing machine (40) and the clamping elements (21) are designed at the same time as centring elements for the at least rough centring and definite alignment of the workpiece holder (1) on the processing machine (40).

18. workpiece holder (1) according to Claim 17, **characterized in that** two of the reference marks (22, 23) on the workpiece holder (1) are arranged diagonally opposite each other.

19. Workpiece holder (1) according to Claim 17 or 18, **characterized in that** the said workpiece holder has an at least approximately rectangular form and the reference marks (22, 23, 24, 25) are arranged in the region of the corners.

20. Workpiece holder (1) according to one of Claims 17 to 19, **characterized in that** the reference marks are formed by bore holes (22, 23, 24, 25).

21. Workpiece holder (1) according to one of Claims 17 to 20, **characterized in that** its underside or the underside of the clamping frame (2) has for the Z-axis positioning at least one abutting surface, which is or are intended to work together with resting surfaces present in a corresponding manner on the processing machine (40) or on its processing bench (41).

22. Workpiece holder (1) according to Claim 17, **characterized in that** the clamping frame (2) is formed in one piece.

23. Workpiece holder (1) according to one of Claims 17 to 22, **characterized in that** the said workpiece holder has a data carrier for the storage of the workpiece position(s) or coordinates and, if appropriate, further data.

24. Workpiece holder (1) according to one of Claims 17 to 23, **characterized in that** the said workpiece holder additionally has at least two reference marks, made at a horizontal distance from each other, for the capturing of its position in the Z direction.

25. Use of a workpiece holder (1) which is designed according to one of Claims 17 to 24 as a mounting frame for workpieces (50, 51, 52, 53, 54) in machine tools, in particular in wire spark eroding machines (40).

## Revendications

1. Procédé de positionnement d'un porte-pièce et de pièces à usiner serrées dedans dans une machine d'usinage, **caractérisé**
a) en ce qu'en premier lieu, sur une station de mesure (30), les coordonnées de chaque pièce à usiner (50, 51, 52, 53, 54) serrée dans le porte-pièce (1) sont mesurées et saisies en fonction d'un système de coordonnées virtuel (26) défini sur le porte-pièce par au moins deux marques de référence (22, 23) disposées à distance horizontale l'une de l'autre sur le porte-pièce (1),
b) en ce que le porte-pièce (1) est ensuite placé et fixé sur la table d'usinage de la machine d'usinage dans une position correspondant au moins approximativement à la position de consigne et en ce que sa position réelle est ensuite déterminée et mémorisée par une exploration des marques de référence (22, 23) en fonction d'au moins un axe de référence de la machine d'usinage (40) et
c) en ce que le système de coordonnées virtuel (26) défini par les marques de référence (22, 23) est superposé par voie de calcul, en même temps que les coordonnées des pièces à usiner (50, 51, 52, 53, 54) serrées dans le porte-pièce (1), au système de coordonnées de la machine d'usinage (40).

2. Procédé selon la revendication 1, **caractérisé en ce que** la/les distance(s) entre les marques de référence (22, 23) est/sont déterminée(s) et saisie(s) en plus sur la station de mesure.

3. Procédé selon la revendication 1, **caractérisé en ce que** la position du porte-pièce (1) est déterminée mécaniquement dans la direction Z.

4. Procédé selon la revendication 1, **caractérisé en ce que** la position du porte-pièce (1) est déterminée dans la direction Z à l'aide d'au moins deux marques de référence disposées à distance verticale.

5. Procédé selon l'une quelconque des revendications précédentes, **caractérisé en ce que** les positions des marques de référence (22, 23) sont analysées par voie mécanique ou optique sur la station de mesure (30).

6. Procédé selon la revendication 5, **caractérisé en ce que** la mesure de la/des position(s) de la pièce à usiner ou des pièces à usiner (50, 51, 52, 53, 54) sur la station de mesure se fait à l'aide d'un capteur de mesure qui s'approche de la/des pièce(s) à usiner (50, 51, 52, 53, 54) sur au moins deux points décalés en formant un angle de 90°.

7. Procédé selon la revendication 5, **caractérisé en ce que** la mesure de la/des position(s) de la pièce à usiner ou des pièces à usiner (50, 51, 52, 53, 54) a lieu par voie optique, par exemple au moyen d'un rayon laser, chaque pièce à usiner (50, 51, 52, 53, 54) faisant l'objet d'une exploration sur au moins deux points décalés en formant un angle de 90°.

8. Procédé selon l'une quelconque des revendications précédentes, dans lequel une machine à érosion par fil métallique (40) est utilisée comme machine d'usinage, **caractérisé en ce que** les positions des marques de référence (22, 23) formées de préférence par des alésages sont mesurées au moyen du fil d'érosion (43).

9. Procédé selon la revendication 8, **caractérisé en ce que**, pour déterminer la position du point central de l'alésage, le fil d'érosion (43) se positionne sur les parois de l'alésage sur au moins trois points décalés de préférence de 90 à 150°, la position du fil d'érosion (43) faisant respectivement l'objet d'une saisie lors du contact dudit fil avec la paroi de l'alésage et la position du point central étant calculée à partir de cela.

10. Procédé selon l'une quelconque des revendications précédentes, **caractérisé en ce que**, après la fixation du porte-pièce (1) dans la machine d'usinage (40), la/les distance(s) entre les marques de référence (22, 23) est/sont déterminée(s) en plus et comparée(s) avec la/les distance(s) mesurée(s) sur la station de mesure (30) et **en ce que**, dans le cas d'une divergence prédéterminée de ces valeurs, les coordonnées de chaque pièce à usiner serrée (50, 51, 52, 53, 54) sont corrigées en ce qui concerne l'origine virtuelle et en fonction de la divergence mesurée des marques de référence (22, 23), cette correction ayant lieu par voie de calcul sur la machine d'usinage (40) dans la direction X et/ou dans la direction Y.

11. Procédé selon l'une quelconque des revendications précédentes, **caractérisé en ce que** l'origine virtuelle du système de coordonnées virtuel est située à peu près au centre d'une droite reliant les deux marques de référence (22, 23).

12. Procédé selon la revendication 1 ou 2, **caractérisé en ce que** les valeurs ayant fait l'objet d'une saisie sur la station de mesure (30) sont transmises à la machine d'usinage (40) au moyen d'une interface (46), par exemple d'un réseau.

13. Procédé selon la revendication 1 ou 2, **caractérisé en ce que** les valeurs mesurées ayant fait l'objet d'une saisie sur la station de mesure (30) sont transmises sur un support de mémorisation et sont introduites par lecture dans la machine d'usinage (40) à l'aide d'un lecteur placé sur cette dernière.

14. Procédé selon la revendication 1 ou 2, **caractérisé en ce que** les valeurs ayant fait l'objet d'une saisie sur la station de mesure (30) sont transmises sur un support de mémorisation pouvant être placé sur le porte-pièce (1).

15. Procédé selon la revendication 14, **caractérisé en ce que** les valeurs mesurées sont appelées sans contact dans le support de données au moyen d'un lecteur placé sur la machine d'usinage (40) et sont introduites par lecture dans la machine d'usinage (40).

16. Procédé selon l'une quelconque des revendications précédentes, **caractérisé en ce que** le porte-pièce (1) est fixé mécaniquement, de préférence par la force d'un ressort, sur la station de mesure (30) et/ou dans la machine d'usinage (40) et est desserré par voie pneumatique.

17. Porte-pièce (1) pour l'exécution du procédé décrit dans l'une quelconque des revendications précédentes, pour le serrage d'une ou de plusieurs pièce(s) à usiner (50, 51, 52, 53, 54), le porte-pièce (1) pouvant être fixé pour l'usinage de la/des pièce(s) à usiner (50, 51, 52, 53, 54) sur une table d'usinage (41) d'une machine d'usinage (40) et présentant un serre-flan (2) avec au moins une butée pour le positionnement du porte-pièce (1) sur les axes Z ainsi qu'au moins deux marques de référence de position (22, 23) disposées à distance horizontale l'une de l'autre, **caractérisé en ce que** le porte-pièce (1) est muni d'au moins trois marques de référence (22, 23 ; 24 ; 25) pour la saisie de sa position aussi bien dans la direction X et Y qu'en ce qui concerne sa position angulaire autour de l'axe Z, le porte-pièce (1) présente des éléments de serrage (21) pour la fixation sur la station de mesure (30) ou respectivement dans la machine d'usinage (40) et les éléments de serrage (21) sont réalisés en même temps comme éléments de centrage pour le centrage au moins grossier et l'orientation claire du porte-pièce (1) sur la machine d'usinage (40).

18. Porte-pièce (1) selon la revendication 17, **caractérisé en ce que** deux des marques de référence (22, 23) sont disposées sur le porte-pièce (1) en étant opposées en diagonale.

19. Porte-pièce (1) selon la revendication 17 ou 18, **caractérisé en ce que** ledit porte-pièce (1) présente une forme au moins approximativement rectangulaire et **en ce que** les marques de référence (22, 23, 24, 25) sont disposées dans la zone des angles.

20. Porte-pièce (1) selon l'une quelconque des revendications 17 à 19, **caractérisé en ce que** les marques de référence sont formées par des alésages (22, 23, 24, 25).

21. Porte-pièce (1) selon l'une quelconque des revendications 17 à 20, **caractérisé en ce que** son côté inférieur ou le côté inférieur du serre-flan (2) présente, pour le positionnement sur les axes Z, au moins une surface d'appui qui est destinée à agir de concert avec des surfaces d'appui existant de manière correspondante sur la machine d'usinage (40) ou respectivement sur la table d'usinage (41) de cette dernière.

22. Porte-pièce (1) selon la revendication 17, **caractérisé en ce que** le serre-flan (2) est réalisé d'un seul bloc.

23. Porte-pièce (1) selon l'une quelconque des revendications 17 à 22, **caractérisé en ce que** ledit porte-pièce présente un support de données pour la mémorisation de la/des position(s) de la pièce à usiner ou respectivement des coordonnées et, le cas échéant, d'autres données.

24. Porte-pièce (1) selon l'une quelconque des revendications 17 à 23, **caractérisé en ce que** ledit porte-pièce présente en plus au moins deux marques de référence disposées à distance horizontale l'une de l'autre pour la saisie de sa position dans la direction Z.

25. Utilisation d'un porte-pièce (1) qui est réalisé selon l'une quelconque des revendications 17 à 24, en tant que serre-flan pour des pièces à usiner (50, 51, 52, 53, 54) dans des machines-outils, en particulier dans des machines à érosion par fil métallique (40).
